# EUROPEAN PATENT APPLICATION

(11) **EP 2 597 037 A2**
(43) Date of publication of application: **29.05.2013**
(21) Application number: 12191748.8
(22) Date of filing: 08.11.2012
(51) Int. Cl.: B64D 27/18, B64D 33/02

(54) **An Aircraft**

(30) Priority: 24.11.2011 GB 201120256
(71) Applicant: Rolls-Royce plc, London SW1E 6AT (GB)
(72) Inventor: Rolt, Andrew, Derby, Derbyshire DE22 2QB (GB); Thompson, Christopher, Derby, Derbyshire DE22 3BF (GB)
(74) Representative: Roberts, Nicholas John

(57) **Abstract**

An aircraft comprises a propulsive fan arrangement (18) having an intake (50) and an exhaust (52). The fan arrangement (18) is mounted adjacent a gas washed surface of the aircraft in the form of a suction surface (14) of a wing (12). The intake (50) is separated from the suction surface (14) to define a channel (20) therebetween. The aircraft further comprises a Venturi device (22) positioned downstream of the fan exhaust (52) to draw boundary layer air (56) through the channel (20).

## Description

### Background of the Invention

The present invention relates to an aircraft. In particular, the invention relates to an aircraft comprising a suction device for drawing air through a channel.

In order to reduce operating costs and environmental impact of aircraft, it is desirable to improve overall aircraft aerodynamic efficiency.

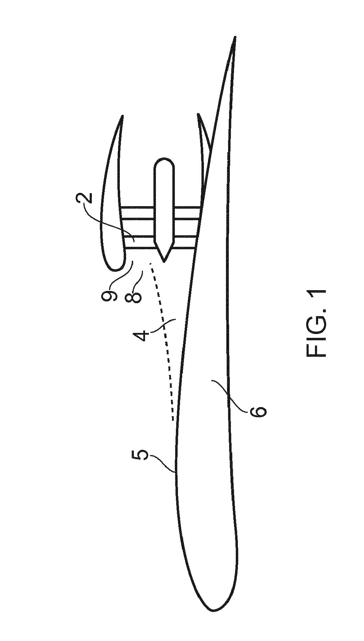

One method for improving overall aircraft aerodynamic efficiency is by locating one or more fan arrangements 2 close to an aerodynamic gas washed surface such as the upper, suction surface 5 of the wing 6, as shown in Figure. 1. However, where the fan arrangement 2 extends both into the reduced total pressure boundary layer airstream 4 adjacent the suction surface and the full total pressure freeflow airstream 8 above the wing 6, large pressure and velocity differentials are introduced across the diameter of the fan arrangement 2. This may lead to increased noise and vibration of the fan arrangement 2 during operation, and may decrease fuel efficiency of the aircraft, and the operating life of the fan blades.

By referring to boundary layer air it will be understood that the term relates to a layer of air on a surface in contact with a moving fluid and may be defined as the portion of the flow near to the surface with a speed that is below 99% of the speed of an equivalent inviscid flow at the same location and conditions. When the velocity of the flow is above 99% of the inviscid case (e.g. almost unchanged) the flow is considered to be outside the boundary layer. Generally, thickness of the boundary layer increases proportionally to the length of the surface it is flowing onto, as it is slowing down due to friction effects.

The present invention seeks to provide an improved aircraft that addresses some or all of the aforementioned problems.

### Summary of the Invention

According to the present invention, there is provided an aircraft comprising:
a propulsive fan arrangement having an intake mounted adjacent a gas washed surface of the aircraft which has boundary layer air flow against the surface in use, the intake being separated from the gas washed surface by a channel therebetween; and,
a suction device positioned to draw boundary layer air flow through the channel in use.

The arrangement therefore provides an aircraft having improved aerodynamic efficiency, as the boundary layer air is drawn through the channel, thereby preventing the boundary layer air from being ingested into the fan arrangement in use.

The suction device may comprise a Venturi device. Alternatively, the suction device may comprise a substantially constant cross section ejector device.

The gas washed surface may comprise one of a pressure surface and a suction surface of an aerofoil of the aircraft. The aerofoil may comprise a wing.

At least part of the suction device may be located downstream of the trailing edge of the aerofoil. The Venturi device may comprise a restriction, the restriction being located downstream of the trailing edge of the aerofoil.

The suction device may have a first inlet in fluid communication with at least the gas washed surface. The first inlet may be in fluid communication with both the suction and pressure surfaces.

The suction device may have a second inlet in fluid communication with a driving airflow source. The driving airflow source may be configured to provide a driving airflow having a velocity at the second inlet which is higher than the velocity of the first airflow at the first inlet in use. Alternatively or in addition, the driving airflow source may be configured to provide a driving airflow having a pressure at the second inlet which is higher than the pressure of the first airflow at the first inlet in use.

The driving airflow source may comprise one of a compressor or an exhaust of a gas turbine engine. Alternatively, the driving airflow source may comprise the propulsive fan arrangement.

The first inlet may be positioned downstream from the intake.

The suction device may comprise an outlet arranged to provide a propulsive air flow for the aircraft. The suction device outlet may be operable to direct the propulsive air flow in a desired direction.

### Brief Description of the Drawings

The present invention will be more fully described by way of example with reference to the accompanying drawings, in which:
Figure 1 is a sectional side view of part of a prior aircraft;
Figure 2 is a sectional side view of part of an aircraft in accordance with the present invention;
Figure 3 is a sectional front view of the aircraft of Figure 2;
Figure 4 is a sectional side view of the region A of the aircraft of Figure 2 with a first suction device in a first position;
Figure 5 is a similar view to Figure 4 with the suction device in a second position;
Figure 6 is a similar view to Figure 4 with the suction device in a third position;
Figure 7 is a plan view of a second aircraft in accordance with the present invention;
Figure 8 is a similar view to Figure 4, but showing a second suction device in accordance with the present invention;
Figure 9 is a similar view to Figure 8, but showing a third suction device in accordance with the present invention;
Figure 10 is a perspective view of a fourth suction device in accordance with the invention; and
Figure 11 is a perspective view of a fifth suction device in accordance with the invention.

### Detailed Description of the Preferred Embodiments

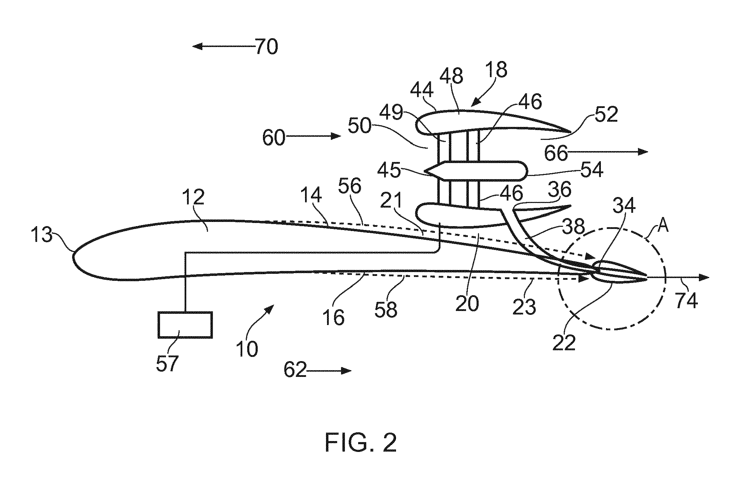

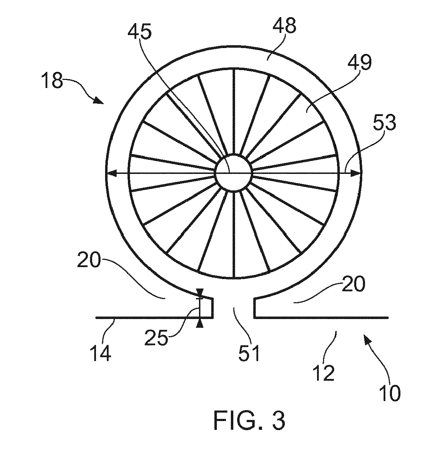

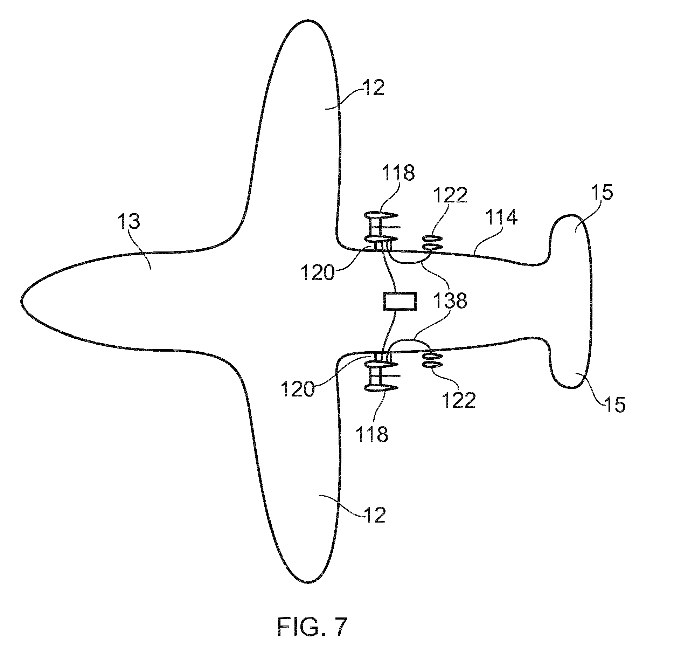

Figure 2 shows a sectional view of an aerofoil of an aircraft 10 in the form a wing 12 and Figure 3 shows a view of the upper surface of the wing 12 from the front of the aircraft 10. The aircraft 10 could be a conventional tube and wing design (similar to that shown in Figure 7 for example), in which a wing 12 spans horizontally and generally perpendicularly to a generally tubular fuselage 13. Alternatively, the aircraft could comprise a Blended Wing Body aircraft, in which the wing is attached to an airfoil section fuselage, such that both the wing and the fuselage contribute to lift.

The wing 12 includes a generally outwardly arcuate suction surface 14 on an upper side, and a pressure surface 16 on a lower side, a leading edge 13 and a trailing edge 34. Together, the suction and pressure surfaces 14, 16 and leading and trailing edges 13, 34, define an aerofoil section, which is arranged to generate lift when the wing is moved in a direction 70 as is well known in the art. The wing 12 may also include control devices such as ailerons (not shown) and lift devices such as flaps (not shown) as is also well known.

A fan arrangement 18 is mounted adjacent a gas washed surface comprising the suction surface 14 of the wing 12 using a pylon 51. The pylon 51 mounts the fan arrangement 18 directly to the wing, though other mounting arrangements could be provided which mount the fan arrangement adjacent the wing such that the fan arrangement 18 is spaced from the gas washed surface. While Figure 2 shows only a single fan arrangement 18, it will be understood that a plurality of fan arrangements 18 could be provided and that these may be preferentially distributed along the span of the wing 12, either immediately adjacent to one another so as to share a nacelle or other support structure, or separated by a conduit or conduits.

The fan arrangement 18 includes a tubular housing 48, the interior of which defines a duct, the exterior of which provides a nacelle 44. A plurality of support members in the form of guide vanes 46 are mounted within the housing 48 and extend radially from a central axis to the inner surface of the housing 48. The guide vanes 46 support an electric motor 54 which has a rotational axis which is coaxial with the central axis of the housing 48. The electric motor 54 is connected to and configured to rotate a fan comprising a plurality of fan blades 49, which extend radially from a central hub 45 to the inner surface of the housing 48. The electric motor 54 can receive power from any suitable source which, in the described embodiment, is a gas turbine engine 57 configured to drive an electrical generator (not shown). The tubular housing 48 defines an intake 50 upstream of the fan blades 49, and an exhaust 52 downstream of the guide vanes 46.

The external surface of the nacelle 48 is separated from the suction surface 14 by the pylon 51 to define a channel 20 between the suction surface 14 and nacelle 48, shown in further detail in Figure. 3. The channel 20 is bounded by the suction surface 14 of the wing and the underside of the nacelle 48. The channel 20 extends from adjacent the intake 50 to adjacent the exhaust 52, and across the diameter 53 of the outer surface of the nacelle 48. The depth 25 of the channel 20, i.e. the distance between the suction surface 14 and the underside of the nacelle 48, is similar to the thickness of the wing boundary layer (as conventionally defined) at cruise conditions, adjacent to the intake 50. On conventional commercial aircraft the boundary layer and the channel could be between 2 and 20 centimetres deep. However, it will be understood by the skilled person that the depth of the boundary layer will be dependent on the wing geometry and the operating conditions, such as speed, altitude and ambient air density.

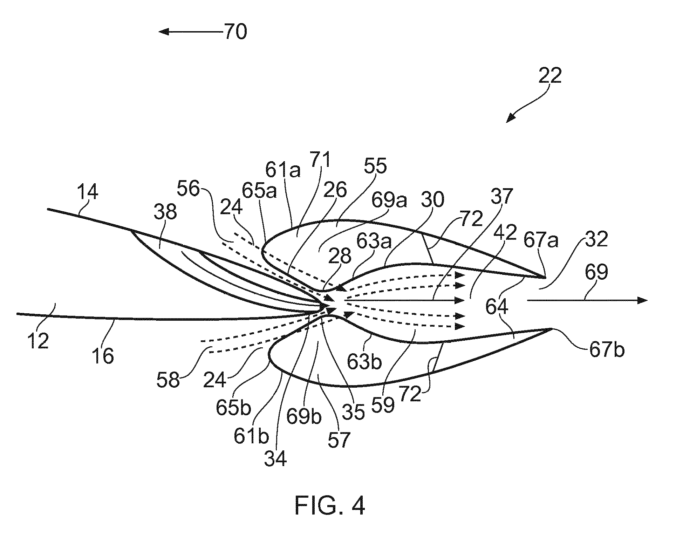

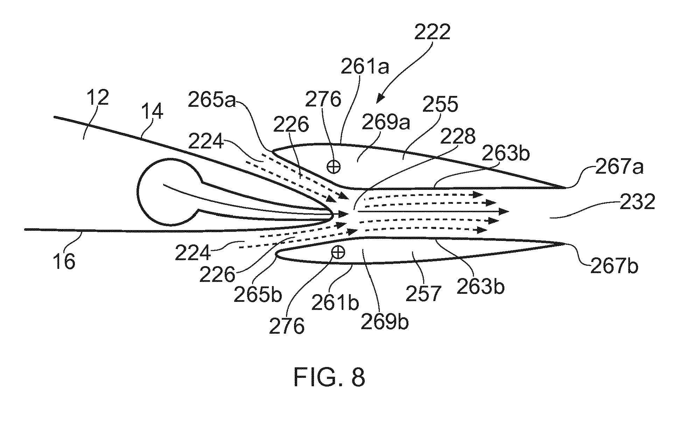

The aircraft 10 further comprises a suction device. In the embodiments shown in Figures 2 to 7, the suction device is in the form of a Venturi device 22. However, the skilled person would appreciate that other types of suction device could be employed, for instance an ejector (such as that shown in the embodiment of Figure 8). While only a single Venturi device 22 is shown in Figure. 2, it will be understood that a plurality of Venturi devices 22 could be provided. Generally, one Venturi device 22 will be provided for each fan arrangement 18. Alternatively, a single Venturi device 22 could be provided which extends behind a plurality of fan arrangements 18 along the span of the wing 12. The Venturi device 22 is shown in further detail in Figure 4.

Referring to Figure 4, the Venturi device 22 comprises a body having a passageway therethrough. Thus, as shown in Figure 4 there is shown upper 55 and lower 57 portions. Each portion 55, 57 comprises a respective external surface 61a, 61b and a respective internal surface 63a , 63b, as well as respective leading 65a, 65b and trailing 67a, 67b edges. Each portion 55a, 55b, 57a, 57b comprises a fixed portion 71 and a moveable portion 64.

The section profile of the internal surface 63a, 63b of each portion 55, 57 varies along an axial length from the respective leading edge 65a, 65b to the respective trailing edge 67a, 67b such that the internal surfaces 63a, 63b together define, in axial flow sequence, a first inlet 24, a convergent portion 26, a restriction 28, a divergent portion 30 and an outlet 32. The internal area of the Venturi device 22 defined by the internal surfaces 63a, 63b varies from a maximum at the first inlet 24, converges toward a minimum at the restriction 28, and diverges again toward the outlet 32. Such an arrangement of convergent 26, restriction 28 and divergent 30 portions is particularly suitable where the difference in pressure and / or velocity of the driving air flow and boundary layer airflows 56, 58 are relatively high, such that the airflow through the Venturi device 22 is substantially supersonic.

The first inlet 24 is located adjacent the trailing edge 34 of the wing 12, such that the trailing edge 34 extends through the first inlet 24, and part way into the convergent portion 26. The first inlet 24 is thus in fluid communication with boundary layers 56, 58 adjacent the suction surface 14, and the pressure surface 16 respectively.

The Venturi device 22 is positioned downstream of the fan arrangement 18, channel 20, and adjacent the trailing edge 34 of the wing 12. The restriction 28 is located downstream of the trailing edge 34, such that the first inlet 24 is defined by the convergent portion 26 and the suction and pressure surfaces 14, 16.

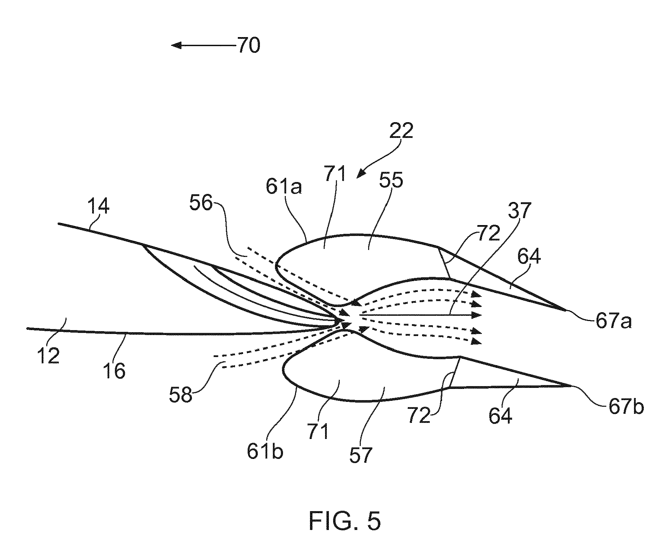

Referring to Figure. 5, the moveable portion 64 of each segment 55, 57 is attached to the respective fixed portion 71 by a pivot arrangement 72, and can be angled upwardly or downwardly by an actuator (not shown). Movement of the moveable portions 64 can thus alter the air flows along both the internal 63 and external 61 surfaces of the Venturi device 22.

The Venturi device 22 further comprises a second inlet 35. The second inlet 35 is in fluid communication with a driving air flow 37 supplied from a fan bleed 36 (shown in Figure 2) from the propulsive fan arrangement 18. The driving air flow 37 is supplied via a duct 38, which extends through the pylon 51 and the wing 12 to the trailing edge 34. The duct 38 terminates at the second inlet 35, which second inlet 35 may comprise a narrow slot extending along the span of the wing 12, or may alternatively comprise a plurality of apertures, which may be arranged along the span of the wing 12. In use, the driving airflow 37 has a higher velocity at the second inlet 35 than the airflows 56, 58 entering the first inlet 24. The higher velocity of the driving air flow 37 is a consequence of the higher pressure of the driving air flow source (i.e. the fan bleed 36).

In use, the fan blades 49 drive air from the intake 50 to the exhaust 52 through the vanes 46, thereby creating a first propulsive airflow 66, to drive the aircraft 10 forward in a direction 70. Once the aircraft 10 has achieved a minimum forward speed, the wing 12 starts to generate useful lift.

When the wing 12 is generating lift, boundary layers 56, 58 are generated adjacent the suction and pressure surfaces 14, 16 respectively of the wing 12, and are bounded by freeflow upper and lower airstreams 60, 62 respectively. The freeflow upper and lower airstreams 60, 62 are both at substantially ambient atmospheric static pressure. Static pressure will be understood to refer to the pressure at a point on a body moving with the fluid, i.e. the pressure of the fluid associated with its state, rather than its motion. Dynamic pressure will be understood to mean the pressure of a fluid due to its motion. Total pressure will be understood to refer to the sum of the dynamic and static pressures. The boundary layer 56 has a lower static pressure than the freeflow airstream 60. The boundary layer 58 has a higher static pressure than the freeflow airstream 62, and the wing thus generates lift.

Referring to Figure 4, when the wing 12 is generating lift, the suction and pressure surface boundary layer airflows 56, 58 are entrained into the first inlet 24 by the internal surfaces 63 of the respective portions 55, 57. Simultaneously, high pressure driving airflow 37 is injected into the second inlet 35 from the fan bleed 36, and the boundary layer flows 56, 58 and driving airflow 37 together enter the restriction 28. The flows 56, 58, 37 mix by, for example, shear force interaction, and are accelerated by the divergent section 30, thereby creating a low static pressure zone 21 local to the suction surface 14. A further low static pressure zone 23 may also be created local to the pressure surface 16 by air flowing into the inlet 24 from the pressure surface 16. In operation, the airflow through the Venturi 22 is maintained at supersonic speeds, so that the air accelerates through the divergent portion 30.

The low static pressure zone 21 creates a pressure differential which draws air through the channel 20. This in turn ensures that the thickness of the boundary layer 56 between the suction surface 14 and the intake 50 does not exceed the height of the channel 20 local to the centreline of the intake 50, i.e. the point of the nacelle closest to the suction surface 14. In other words, the boundary layer 56 is located below the intake 50, such that the fan 44 draws only freestream air 60.

The mixed boundary layers 56, 58 and driving airflows 37 exiting the outlet 32 provide a second propulsive flow 74, which contributes forward thrust to the aircraft 10. In operation, the outlet 32 can be hinged about points 72 in a vertical plane to selectively direct the second propulsive flow 74 in a desired direction in the vertical plane.

Where a Venturi device 22 is provided on each wing, the outlet 32 of a Venturi device 22 provided on one wing could be directed downwardly to the same extent as the outlet 32 of the Venturi device 22 provided on the other wing in order to generate additional lift, analogous to flaps. Alternatively or additionally, the outlet 32 of a Venturi device 22 provided on one wing could be directed in a different direction to the outlet 32 of the Venturi device 22 provided on the other wing, in order to generate roll forces on the aircraft 10, analogous to ailerons.

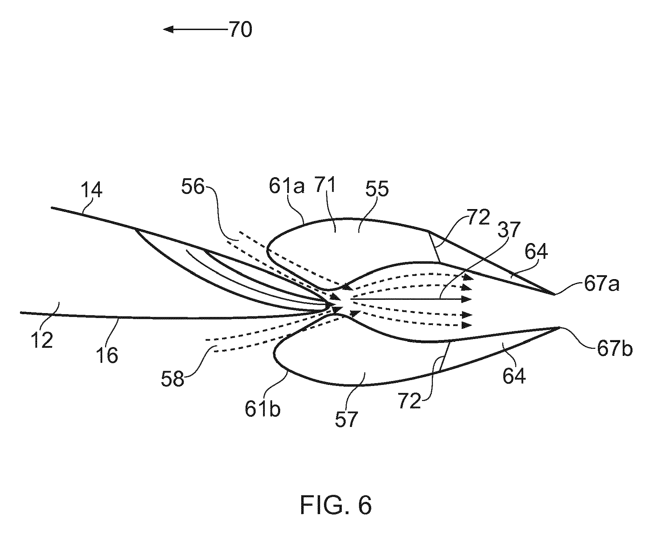

As shown in Figure 6, the moveable portions 64 of each segment 55, 57 could also be operated independently to control the area of the outlet 32 in order to control the pressure and or velocity of the second propulsive flow 74. For example, the moveable portions 64 could be moved towards each other to increase the velocity of the second propulsive flow 74 to maintain the propulsive flow 74 at optimum efficiencies at various speeds and altitudes.

Figure 8 shows an alternative suction device in the form of an ejector device 222 in accordance with the present invention. Though the ejector device 222 is not a Venturi device, both devices share some features. Equivalent features to those of the Venturi device 22 are represented by the same reference numerals, but incremented by 200. The ejector device 222 includes upper 255 and lower 257 portions. However, the ejector device 222 differs from the Venturi device 22, in that the ejector device 222 does not include fixed and moveable portions, but rather the whole of each portion 255, 257 is moveable within a vertical plane about a pair of pivots 276.

The ejector device 222 also differs from the Venturi device 22 in that the upper and lower portions 255, 257 are asymmetrical, and the internal and external surfaces comprise a different geometry.

The upper and lower portions 255, 257 comprise respective external 261a, 261b and internal 263a, 263b surfaces, and respective leading 265a, 265b and trailing 267a, 267b edges.

The external surface 261a of the upper portion 255 is generally outwardly concave along the length from the leading edge 265a to the trailing edge 267a. The thickness between the internal 263a and external 261a surfaces varies from a minimum at the leading 265a and trailing 267a edges, to a maximum at an intermediate portion 269a.

The external surface 261b of the lower portion 257 is generally outwardly concave along the length from the leading edge 265b to the trailing edge 267b, though to a lesser extent than the external surface 261a of the upper portion 255. The thickness between the internal 263b and external 261b surfaces varies from a minimum at the leading 265b and trailing 267b edges, to a maximum at an intermediate portion 269a. The maximum thickness of the lower portion 257 is thinner than the maximum thickness of the upper portion 255. This asymmetry between the upper and lower portions 255, 257 maintains the airfoil section of the wing 12.

The internal surfaces 263a, 263b define inlet 224, convergent 226, restriction 228 and outlet 232 portions, similar to the Venturi device 22. However, in comparison to the Venturi device 22, the convergent portion 226 converges to a lesser degree. The profile of the convergent portion 226 corresponds to the profile of the portion of the wing 12 extending into the convergent portion 226, such that the overall cross sectional area of the restriction 228 is similar to the area of the first and second inlets 224, 238 combined. The divergent portion 30 of the Venturi device 22 is omitted in the ejector device 222. Instead, the ejector device 222 has an outlet portion 232 of substantially constant cross section, which extends from the restriction portion 228 to the trailing edges 267a, 267b. The total cross sectional area of the internal surfaces of the ejector 222 is therefore substantially constant from the leading edges 265a, 265b to the trailing edges 267a, 267b.

Such an arrangement would be particularly suitable where the pressure and or velocity difference between the driving air flow 37 and the boundary layer airflows 56, 58 is relatively low, such that the air travelling through the ejector device 222 is substantially subsonic or transonic.

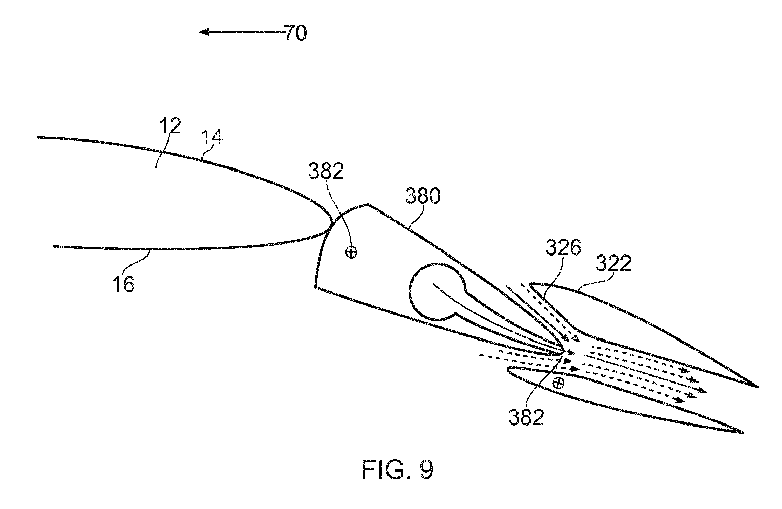

Figure 9 shows a further alternative suction device in the form of an ejector device 322. Again, equivalent features to the Venturi device 22 are represented by the same reference numerals, but incremented by 300.

The ejector device 322 has a similar shape and function to the ejector device 222, but differs in that the ejector device 322 is fixedly mounted to a flap 380, which is in turn moveably mounted to a trailing edge of a wing 12 by a pivot 382. The ejector device 322 is located such that a trailing edge 382 of the flap 380 extends into the convergent portion 326 of the ejector device 322. The flap 380 can be moved downwardly in a vertical plane (in a similar manner to a conventional flap) in order to increase lift generated by the wing. The ejector device 322 is positioned such that the low pressure zone 21 local to the channel 20 is created at substantially any flap angle, and thus air is drawn through the channel 20 at substantially any flap angle.

Figure 7 shows a second aircraft 110 in accordance with the present invention. Reference numerals incremented by 100 are used to refer to similar features described in relation to the first aircraft 10.

The second aircraft 110 is a conventional "tube and wing" aircraft, comprising a fuselage 13, wings 12 and a pair of propulsive fan arrangements 118 powered by a gas turbine engine. The propulsive fan arrangements 118 are mounted adjacent a gas washed surface in the form of an external skin 114 of the fuselage 13 to define channels 120 between the fuselage and the respective fan arrangement 118. The propulsive fan arrangements 118 are shown mounted downstream of the wing, though the propulsive fan arrangements 118 could be mounted adjacent substantially any location on the fuselage 13.

Suction arrangements in the form of Venturi devices 122 are provided downstream of each fan arrangement 118, though ejector devices 222 could alternatively be provided. The Venturi devices 122 are similar to the Venturi devices 22 and are supplied with driving air from a respective fan arrangement 118 via a respective duct 138. The Venturi devices 122 may or may not include moveable portions.

The Venturi arrangements 122 operate in a similar manner to the Venturi devices 22, and draw boundary layer air through the channel the channel 120 defined by the external skin 114 and fan arrangement 118.

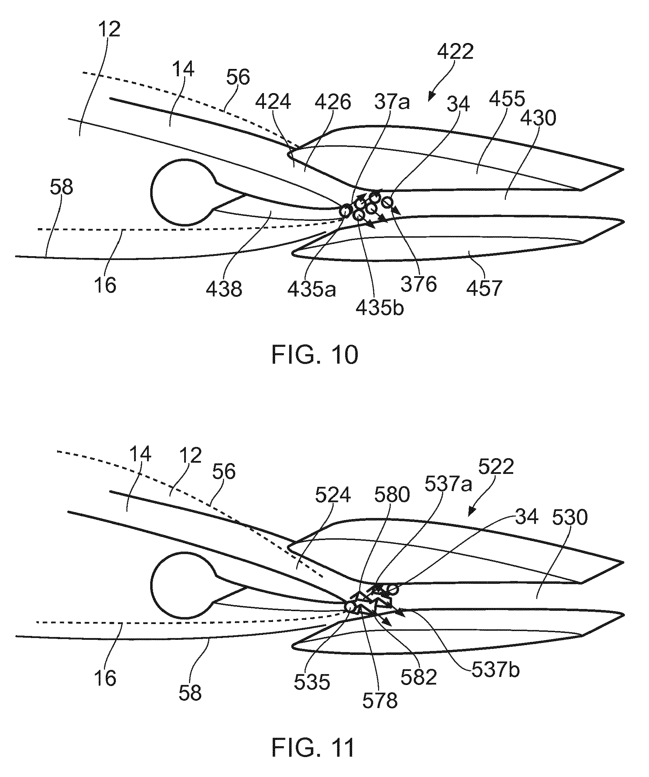

Figure 10 shows a third suction device in accordance with the invention. The third suction device comprises an ejector device 422. The ejector device 422 is similar to the ejector device 222. Equivalent features to the ejector device 222 are represented by the same reference numerals, but incremented by 200.

The ejector device 422 comprises upper 455 and lower 457 portions, a first inlet 424, convergent portion 426, and outlet 430. The ejector 422 is shown as simplified for clarity, but could include for instance, fixed and moveable portions, similar to those provided in the Venturi 22, or the ejector 422 could be pivotable, similar to the ejector 222.

The ejector 422 further comprises a plurality of spaced second inlets 435a, 435b, which are located along the span of the trailing edge 34 of the wing 12. In Figure 10, three upwardly directed second inlets 435a and three downwardly directed second inlets 435b are shown, though further second inlets could be provided spaced along the span of the trailing edge of the wing 12.

Each second inlet 435a, 435b provides driving airflow 437a, 437b from a duct 438. The upwardly directed second inlets 435a direct the driving airflow 37a in a rearward (i.e. away from the trailing edge 34) and upward (i.e. toward the suction surface 14) direction, while the downward directed second inlets 435b direct the driving airflow 437a in a rearward (i.e. away from the trailing edge 34) and downward (i.e. toward the pressure surface 16) direction. Such an arrangement provides improved mixing between the driving airflows 437a, 437b and the respective boundary layer airflows 56, 58. As a result, the ejector device 422 can be shorter (i.e. extend less far from the trailing edge 34) in comparison to the ejector 222 for the same thrust. However, this arrangement also leads to higher pressure losses between the inlet 424 and outlet 430, compared to the ejector 222. Though this embodiment comprises a substantially constant cross section ejector 422, a plurality of similar second inlets 435a, 435b could be provided in the Venturi device 22.

Figure 11 shows a fourth suction device in accordance with the invention comprising an ejector device 522. The ejector device 522 is similar to the ejector device 422, having a first inlet 524 and outlet 530, and equivalent features to the ejector device 422 are represented by the same reference numerals, but incremented by 100.

The ejector device 522 includes a single second inlet 535, which extends along the span of the trailing edge 34 of the wing 12. The second inlet 535 includes a plurality of lobes 582. The lobes 582 comprise alternating peaks 580 and troughs 578 defined by the upper and lower edges of the second inlet 535. The peaks 580 and troughs 578 direct driving airflows 537a, 537b rearwards and also in upward and downward directions respectively. The driving airflows 537a, 537b mix with the boundary later airflows 56, 58, in a similar manner as in the ejector device 422. The ejector device 522 provides further improved mixing between the driving airflows 537a, 537b and the respective boundary layer airflows 56, 58 in comparison to the ejector device 222, thereby resulting in a shorter ejector device 522 for the same thrust. Again though, such an arrangement may result in higher pressure losses between the first inlet 524 and outlet 530, compared to the ejector 222. Again, such an arrangement could be provided in the Venturi device 22.

The arrangement therefore provides a means to control the boundary layers on one or more aerodynamic surfaces to prevent boundary layer ingestion by a wing mounted fan. The suction device is positioned adjacent the trailing edge of the wing where the boundary layer is thickest (i.e. extends furthest from the respective suction and pressure surfaces), and so is able to ingest a maximum quantity of boundary layer air. The arrangement may also help to prevent boundary layer separation, and hence stall, at high angles of attack. As a result, the fan arrangement can be mounted closer to the respective aerodynamic surfaces relative to prior arrangements, without ingesting boundary layer air, thereby increasing the aerodynamic advantage of the location of the fan arrangement without incurring the penalty associated with ingestion of boundary layer air.

While the invention has been described in conjunction with the examples described above, many equivalent modifications and variations will be apparent to those skilled in the art when given this disclosure. Accordingly, the examples of the invention set forth above are considered to be illustrative and not limiting. Various changes to the described embodiment may be made without departing from the spirit and scope of the invention, as defined by the claims.

For example, an alternative suction device could be provided, such as one or more second fans mounted behind the propulsive fan arrangement. The propulsive fan arrangement could be mechanically driven by the gas turbine engine. Alternatively, the aircraft might not comprise a gas turbine engine, and the fan arrangement could instead be provided with electrical power from a hydrogen fuel cell for example.

The second inlet could be provided with a driving airflow from a different source, such as the gas turbine engine. In particular, the driving airflow could be provided by an exhaust of the gas turbine engine. Such an arrangement would require the duct to be made from materials that could withstand the high temperature exhaust gas flow. Such an arrangement could however prevent icing within the otherwise relatively cold duct. Alternatively, the driving air could be provided from a core compressor stage of the gas turbine engine. The compressor stage of the gas turbine engine would generally provide a higher pressure, higher temperature air flow compared to the airflow from the fan of the fan arrangement.

The inlet on the pressure surface of the wing could be omitted, and the lower segment of the Venturi device could be configured as an extension of the trailing edge of the wing.

In a still further alternative, where the gas turbine engine comprises an air-cooled intercooler for cooling the airflow between compressor stages, the spent cooling air from the low pressure side of the intercooler could be used as the driving airflow. Such driving airflow would have a relatively high temperature and pressure, thereby preventing icing within the duct. A mixture of one or more of the above sources of air could also be used.

The suction device could be located in a different location, provided the suction device draws boundary layer air through the channel defined by the gap between the fan arrangement and gas washed surface.

## Claims

1. An aircraft comprising:
a propulsive fan arrangement (18) having an intake (50) mounted adjacent a gas washed surface of the aircraft which has boundary layer air flow (56, 58) against the surface in use, the intake (50) being separated from the gas washed surface by a channel (20) therebetween; and,
a suction device (22) positioned to draw boundary layer air flow through the channel (20) in use.

2. An aircraft according to claim 1, wherein the suction device comprises a Venturi device (22).

3. An aircraft according to claim 1, wherein the suction device comprises a substantially constant cross section ejector device (22).

4. An aircraft according to any of the preceding claims, wherein the gas washed surface comprises one of a pressure surface (16) and a suction surface (14) of an aerofoil (12) of the aircraft.

5. An aircraft according to claim 4, wherein the aerofoil comprises a wing (12).

6. An aircraft according to either of claims 4 or 5, wherein at least part of the suction device (22) is located downstream of a trailing edge (34) of the aerofoil (12).

7. An aircraft according to claim 6 when dependent on claim 2, wherein the Venturi device (22) comprises a restriction (28), the restriction (28) being located downstream of the trailing edge (34) of the aerofoil (12).

8. An aircraft according to any of the preceding claims, wherein the suction device (22) has a first inlet (24) in fluid communication with at least the gas washed surface, which first inlet (24) may be in fluid communication with both the suction and pressure surfaces (14, 16).

9. An aircraft according to any of the preceding claims, wherein the suction device (22) has a second inlet (35) in fluid communication with a driving airflow source.

10. An aircraft according to claim 10, wherein the driving airflow source is configured to provide a driving airflow having a velocity at the second inlet (35) which is higher than the velocity of the first airflow at the first inlet (24) in use, and the driving airflow source may be configured to provide a driving airflow having a pressure at the second inlet (35) which is higher than the pressure of the first airflow at the first inlet (24) in use.

11. An aircraft according to any of claims 9 or 10, wherein the driving airflow source comprises the propulsive fan arrangement (18).

12. An aircraft according to claim 8 or any claim dependent thereon, wherein the first inlet (24) is positioned downstream from the intake (50).

13. An aircraft according to any of the preceding claims, wherein the suction device (22) comprises an outlet (32) arranged to provide a propulsive air flow for the aircraft, which outlet (32) may be operable to direct the propulsive air flow in a desired direction.

14. An aircraft according to claim 9 or any claim dependent thereon, wherein the second inlet (35) comprises a plurality of lobes (582), each lobe (582) being configured to direct the driving air flow toward one of the boundary layer airflows.

15. An aircraft according to claim 9 or any claim dependent thereon, wherein the suction device (22) comprises a plurality of spaced second inlets (435a, 435b), each second inlet (435a, 435b) being configured to direct the driving air flow toward one of the boundary layer airflows.
